# EUROPEAN PATENT SPECIFICATION

(11) **EP 0 423 730 B1**
(45) Date of publication and mention of the grant of the patent: **04.03.1998**
(21) Application number: 90119845.7
(22) Date of filing: 16.10.1990
(51) Int. Cl.: H04L 12/28, H04L 12/40

(54) **Electronic device with data transmission function**
Elektronische Anordnung mit Datenübertragungsfunktion
Dispositif électronique à fonction de transmission de données

(30) Priority: 17.10.1989 JP 269344/89
(43) Date of publication of application: 24.04.1991
(73) Proprietor: MATSUSHITA ELECTRIC INDUSTRIAL CO., LTD., Kadoma-shi, Osaka-fu, 571 (JP)
(72) Inventor: Ikezaki, Masao, Neyagawa-shi, Osaka-fu (JP)
(74) Representative: Eisenführ, Speiser & Partner

(56) References cited:
- EP-A- 0 304 074
- EP-A- 0 328 435
- EP-A- 0 333 269
- SAE TECHNICAL PAPER , SERIES NO. 840317 February 1984, WARRENDALE , US pages 177 - 184 R.L.MITCHELL 'A small area network for cars'
- IEEE INSTRUMENTATION AND MEASUREMENT TECHNOLOGY CONFERENCE 20 April 1988, SAN DIEGO , US pages 20 - 25 R.A. SCHUH 'An Overview of the 1553 bus with testing and simulation considerations'

## Description

### BACKGROUND OF THE INVENTION

### 1. Field of the Invention

The present invention relates to an electronic device with a communications function to transmit data by a transmitting means to an audio visual device in a domestic data communications network system.

### 2. Description of the Prior Art

EP-A-0 333 269 defining the closest prior art from which the invention proceeds discloses a multi-station communication bus system which allows the use of several master stations by way of an arbitration organization. A message contains a master address which is subjected to an arbitration operation, a slave address with space for a slave address acknowledge bit, a control signal with space for a control acknowledge bit, and one or more data bytes. Per data byte an indication of the last byte is also transmitted, and space is reserved for a data acknowledge bit. When a data acknowledge bit is not correctly received, the data byte in question is repeated until at most the maximum frame length is reached. The remainder of a message is then placed in a next frame. If an address or control acknowledge bit is not correctly received, the relevant frame is terminated. In case of a plurality of bytes in a message, the first frame thereof has a lock control signal which is activated upon communication of at least one data byte. Moreover, the last byte of the message is put in a separate frame which has an unlock control signal which is activated upon communication of the last byte.

In SAE Technical Paper, Series No. 840317 February 1984, Warrendale, US pages 177-184, R.L. Mitchell "A small area network for cars", it is described a multiple master small area network including a digital data bus. The protocol of the digital data bus permits arbitration between several units to gain control of the bus to satisfy the requirements of a multi-master system. The protocol permits not only the addressed device but also the controlling device (master) to be identified.

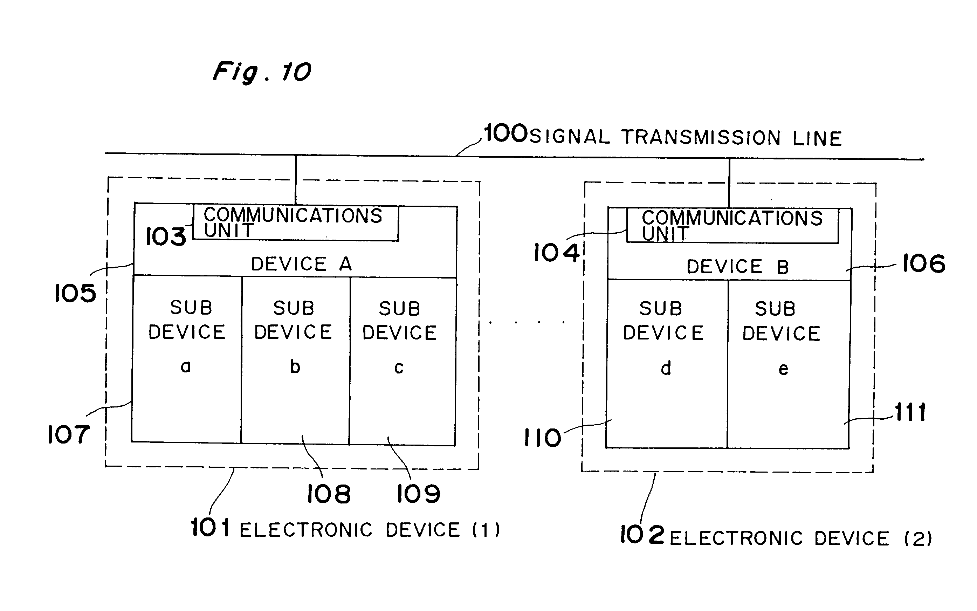

A Domestic Digital Bus (IEC 84 (Secretariat) 86I,II; Draft-Domestic Digital Bus (D2B)) has been known to communicate data between audio visual devices (referred to as AV devices hereinafter) connected to a common signal transmission path. The AV device provided with such communications means as above has generally worked in the systematic structure illustrated in Fig. 10 through connection via a bus line.

More specifically, for transmitting data between an electronic device (1) 101 and an electronic device (2) 102 in the structure of Fig. 10, conventionally, a frame which is formed in the structure shown in Fig. 11 is used and the data are stored in a data field (DF) 123 of the frame from a master transmitter side to a slave receiver side. In other words, two kinds of transmitting procedures as shown in Figs. 13a and 13b are conducted, i.e., a procedure A for reading data and a procedure B for writing data.

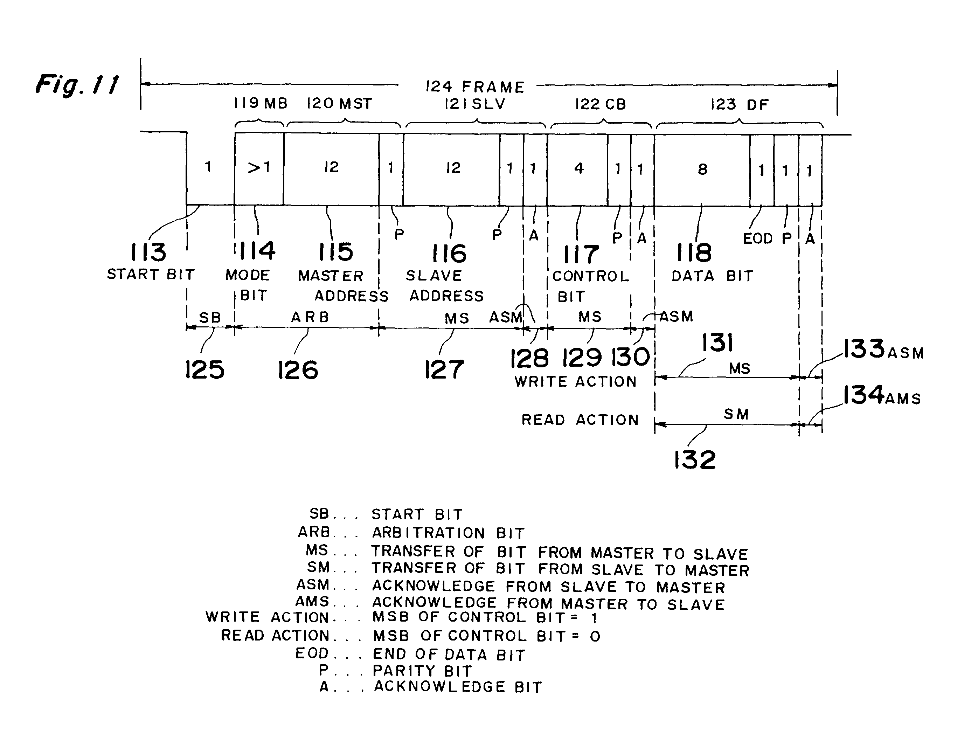

The structure of the frame shown in Fig. 11 is common to the embodiment of the present invention.

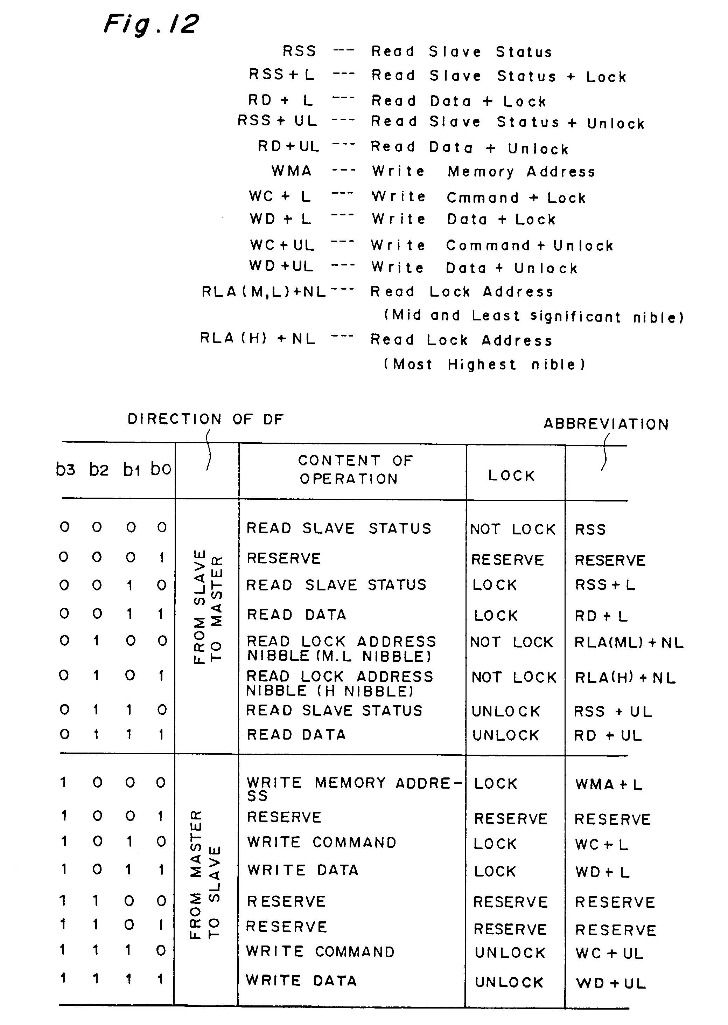

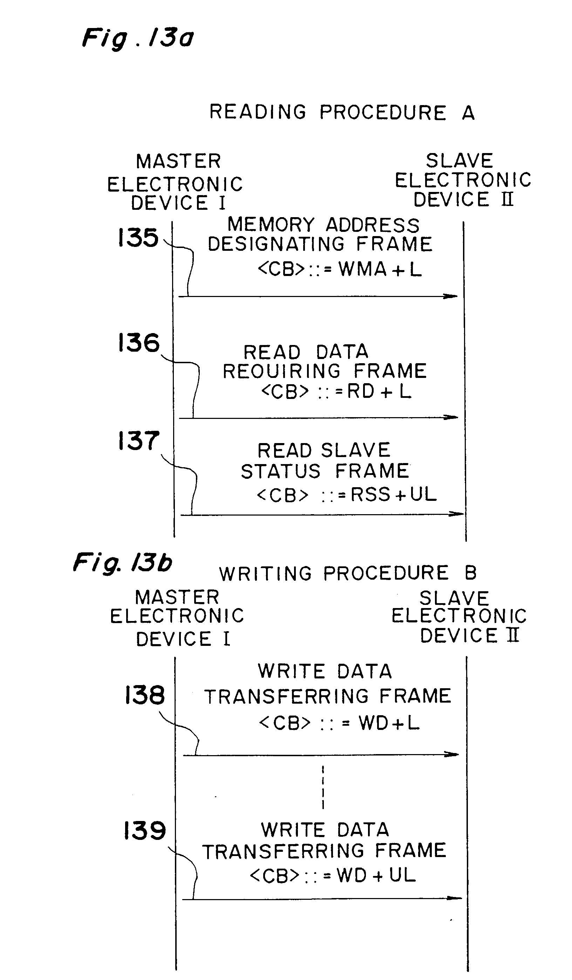

In the procedure A, the master (electronic device (1)) 101, with specifying a preliminarily determined read address, reads out a part of the content stored in a memory unit of the slave (electronic device (2)) 102. In this case, the master transmits a memory address designating frame 135 shown in Figs. 13a and 13b, then a read data requiring frame 136 and a read slave status frame 137 to the slave 136. In the memory address designating frame 135, a preliminarily defined 12-bit address of the master (electronic device (1)) 101 is stored in a master address 115 in Fig. 11, a preliminarily-defined 12-bit address of the slave (electronic device (2)) 102 into a slave address 116, a code (b3b2b1b0='1000'B) indicating a write memory address with lock (WMA+L) shown in Fig. 12 into a control bit 117, and a memory read address preliminarily defined 1:1 corresponding to the content of the memory unit which the master (electronic device (1)) 101 desires to read out from the slave (electronic device (2)) 102 into a data bit 118, respectively. On the other hand, in the read data requiring frame 136, the same values as in the memory address designating frame 135 are stored in the master address 115 and slave address 116, a code (b3b2blb0='0011'B) indicating a read data with lock (RD+L) into the control bit 117, and the content in a memory area which is rendered corresponding by the memory read address in the memory unit of the slave (electronic device (20) 102 into the data bit 118, respectively. Further, in the read slave status frame 137, the same values as in the memory address designating frame 135 are stored in the master address 115 and slave address 116, a code (b3b2b1b0='0110'B) indicating a read slave status with unlock (RSS+UL) into the control bit 117, and the content of the slave status of the slave (electronic device (2)) 102 into the data bit 118. The data bit 118 of the memory address designating frame 135 is transferred in a direction of the write action (MS)131 of Fig. 11, while the data bit 118 of the read data requiring frame 136 is transferred in a direction of the read action (SM)132 shown in Fig. 11. Likewise, the data bit 118 of the read slave status frame 137 is transferred in the (SM)132 direction. The read slave status frame 137 is used so as to release an indication of the master that the slave be locked.

Meanwhile, in the procedure B, the master (electronic device (1)) 101 simply transfers the data to the slave (electronic device (2)) 102 through consecutive transmission of one or a plurality of write data transferring frames 138 and one write data transferring frame 139 of Fig. 13b. In this case, a preliminarily defined 12-bit address of the master (electronic device (1)) 101 is stored in the master address 115 of each of the write data transferring frames 138 and write data transferring frame 139, and a preliminarily defined 12-bit address of the slave (electronic device (2)) 102 is stored in the slave address 116 of each frame. A code (b3b2b1b0='1011'B) representing a write data with lock (WD+L) as indicated in a table of Fig. 12 is stored in the control bit 117 of the write data transferring frame 138. Moreover, a code (b3b2b1b0='1111'B) indicating a write data with unlock (WD+UL) is written and stored in the write data transferring frame 139.

Transmission of data has been carried out in the foregoing manner heretofore.

However, the above-described conventional method for transmission of data in the electronic devices with a data transmission function is found disadvantageous in the following points.
(a) The data are transmitted between a master electronic device and a slave electronic device using two procedures for respective different purposes. In other words, a transmitting procedure when the master reads out the content stored in the memory unit of the slave as data is different from the procedure when the master writes the content stored in the memory unit thereof into a memory unit of the slave. Therefore, no unity is found in the data transmission function, requiring complicated processes in actual communications.
(b) The structure of a communications means within the electronic device realizing both transmission of data and transmission of commands is not clear, and moreover, the role of the communications means in the data transmitting function is not clearly defined. Furthermore, the format, definition and role of the memory address designating frame are not identified between writing and reading processes, whereby the structure of the communications means, in terms of both hardware and software, results in tedious inconsistency.

### SUMMARY OF THE INVENTION

The present invention has been developed with a view to substantially eliminating the above-described disadvantages inherent in the prior art, and has for its essential object to provide an electronic device with a uniform data transmission function adapted to communicate data through memory access, while solving complexities in actual installation and communications process, wherein a communications means is constituted in a manner to realize transmission of both data and command in the communications process.

In accomplishing the above described object, according to the invention there is provided an electronic device having a data transmission function suitable for transmitting data between said electronic device and another electronic device, said electronic device being adapted for connection via a common signal transmission line to another electronic device, and being provided with a communications means so that a frame of a predetermined message format including a data field part in which a command, data or memory access information is stored and a control bit part in which at least the type of said command, data or memory access information stored in said data field part is written is transmitted therebetween via said common signal transmission line in accordance with a preliminarily set communications controlling function, wherein said communications means comprises a communications unit which provides said communications controlling function to transmit the content in said data field of the frame in a transparent manner between a transmitter electronic device and a receiver electronic device;
characterized in that
the electronic device is adapted to transfer or receive preliminarily a memory access designating frame commonly before the transmission of a read data requiring frame or a write data transferring frame, wherein the format of a data field of the memory access designating frame is defined so that the data field of the memory access designating frame sent from a master electronic device to a slave electronic device is provided with a writing unit of data related to the type of access, i.e. reading or writing, and a memory storing address; and that
said communications means further comprises a device controlling part and a data transmission processing part, wherein said device controlling part provides a relay/processing means related to the transmission and receipt of said command between a user of said communication means and said communications unit and a relay/processing means related to the transmission and receipt of said data between said user and said data transmission processing part, and said data transmission processing part is interposed between said communications unit and said device controlling part and which is adapted to manage the communications state for reading and writing of data with the use of said frame for transfer of data between electronic devices,
wherein, the said device controlling part of the master electronic device is adapted to when the data are to be transmitted between the master electronic device and the slave electronic device, the type of access and a memory storing address at the side of the slave electronic device are sent from the device controlling part of the master electronic device to the data transmission processing part, and, if writing of data is indicated, the data to be transferred are also sent from the device controlling part to the data transmission processing part the said data transmission processing part of the master electronic device is adapted to assemble a memory access designating frame based on the transmission informations sent from the device controlling part of the master electronic device and sends the same to a data transmission processing part of the slave electronic device through a communications controlling part of said communications unit, the data transmission processing part of the slave electronic device discriminates the type of access in preparation for every process to receive a write data transferring frame or a read data requiring frame subsequently sent from the master electronic device, and, after the data are completely transferred between the master and slave electronic devices by the write data transferring frame or read data requiring frame, each data transmission processing part of the master and slave informs the result of communications, i.e., the content of the data, to the respective device controlling part.

In the electronic device according to the present invention, a format is defined so that a data field (DF) of a memory access designating frame sent from a master to a slave is provided with a writing unit of data related to the type of access, i.e., reading or writing and a memory storing address. It is so arranged in the electronic device of the present invention that the memory access designating frames are preliminarily transferred commonly before the transmission of a read data requiring frame or a write data transferring frame. At the same time, a device unit of the electronic device of the present invention which unit provides a communications means for executing data transmission is constituted at least of a device controlling part, a data transmission processing part and a communications part.

In the structure as above, the present invention will achieve the following effects.

That is, when the master indicates either writing or reading of data to the slave when the data are to be transmitted between the master electronic device and the slave electronic device, the type of access and a memory storing address at the slave side are sent from the device controlling part of the master to the data transmission processing part, thereby starting the memory access communications process for the data transmission. At this time, if writing of data is indicated, the data to be transferred are also sent from the device controlling part to the data transmission processing part. Consequently, the data transmission processing part assembles a memory access designating frame based on the transmission informations sent from the master side and sends the same to a data transmission processing part of the slave through a communications part. The data transmission processing part at the slave side discriminates the type of access in preparation for every process to receive a write data transferring frame or a read data requiring frame subsequently sent from the master. After the data are completely transferred between the master and slave sides by the write data transferring frame or read data requiring frame, each data transmission processing part of the master and slave sides informs the result of communications, i.e., the content of the data, to the respective device controlling part. In this manner, writing or reading of the data is realized.

### BRIEF DESCRIPTION OF THE DRAWINGS

This and other objects and features of the present invention will become apparent from the following description taken in conjunction with one preferred embodiment thereof with reference to the accompanying drawings, in which:

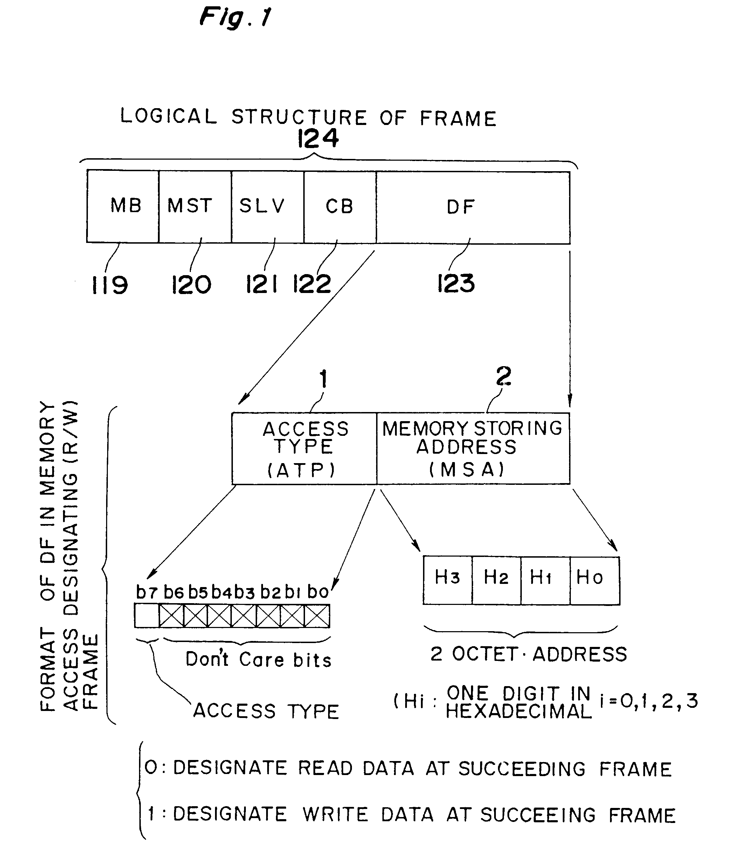

Fig. 1 is a diagram explanatory of a format of a data field of a memory access designating (R) frame/memory access designating (W) frame in one embodiment of the present invention;

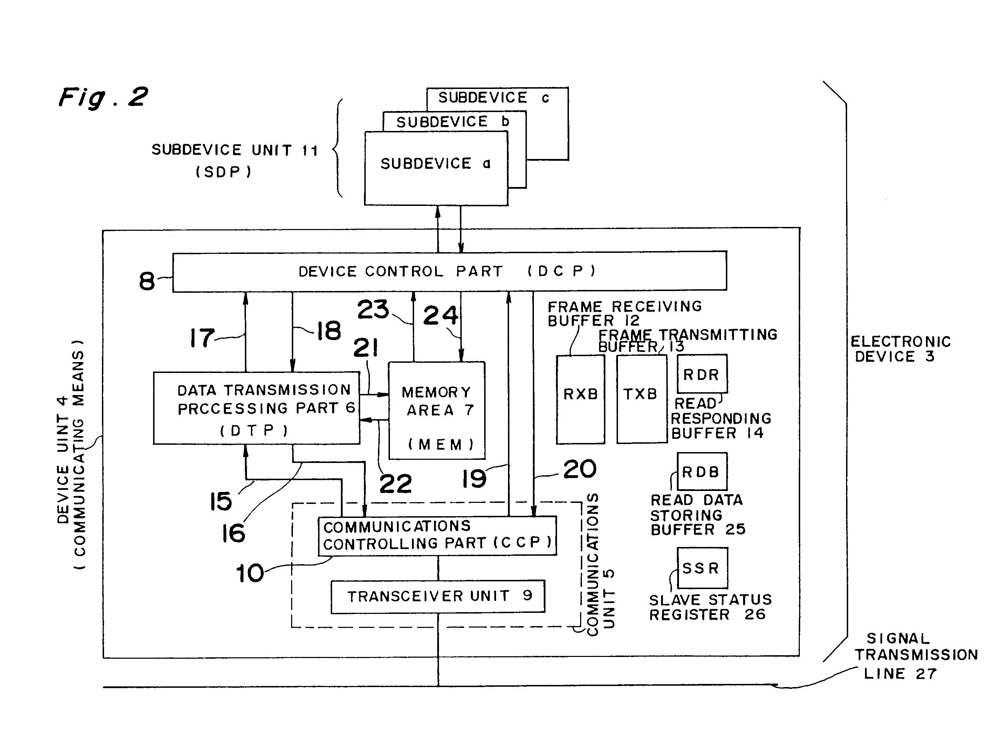

Fig. 2 is a structural diagram of a device unit offering a communications means of the embodiment;

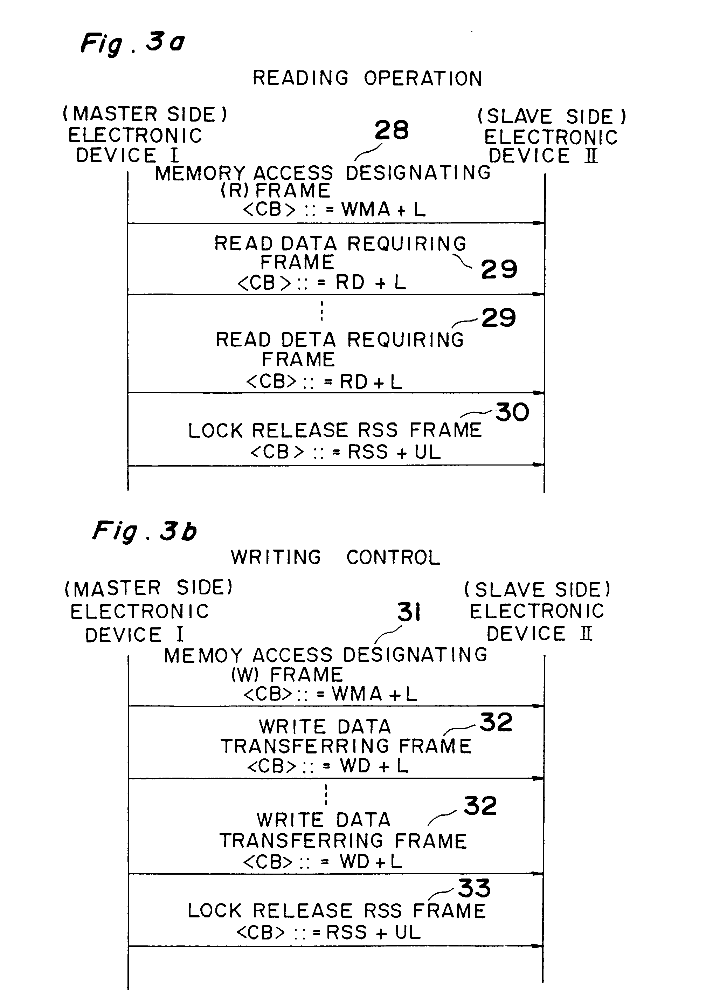

Figs. 3a and 3b are diagrams showing communications sequences in reading and writing operations of the embodiment;

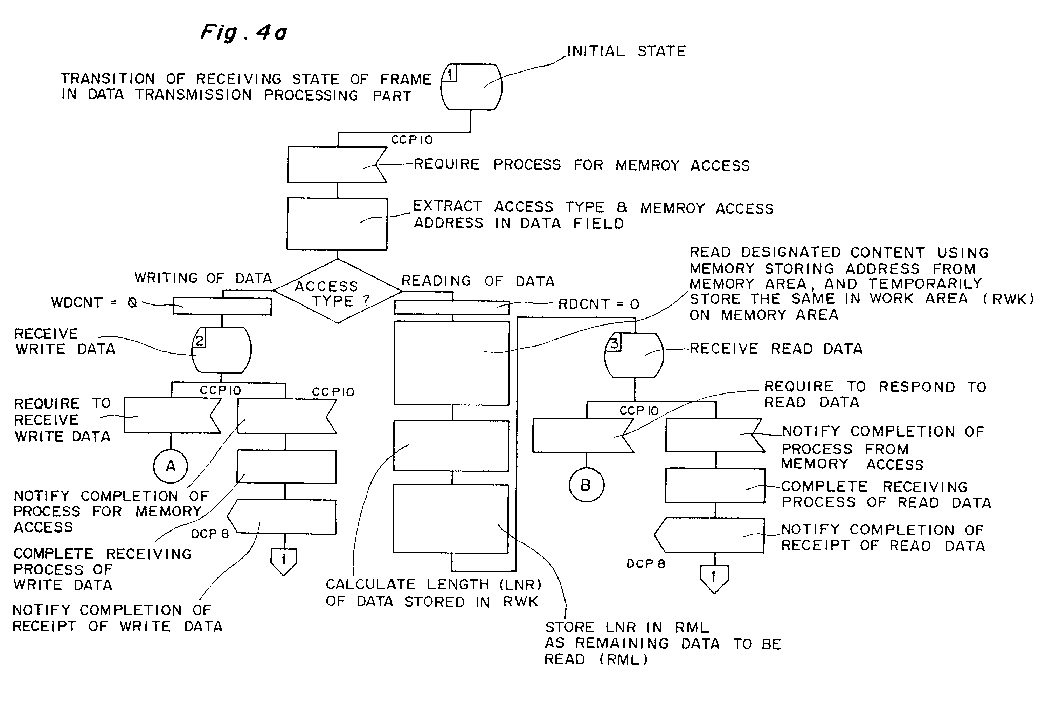

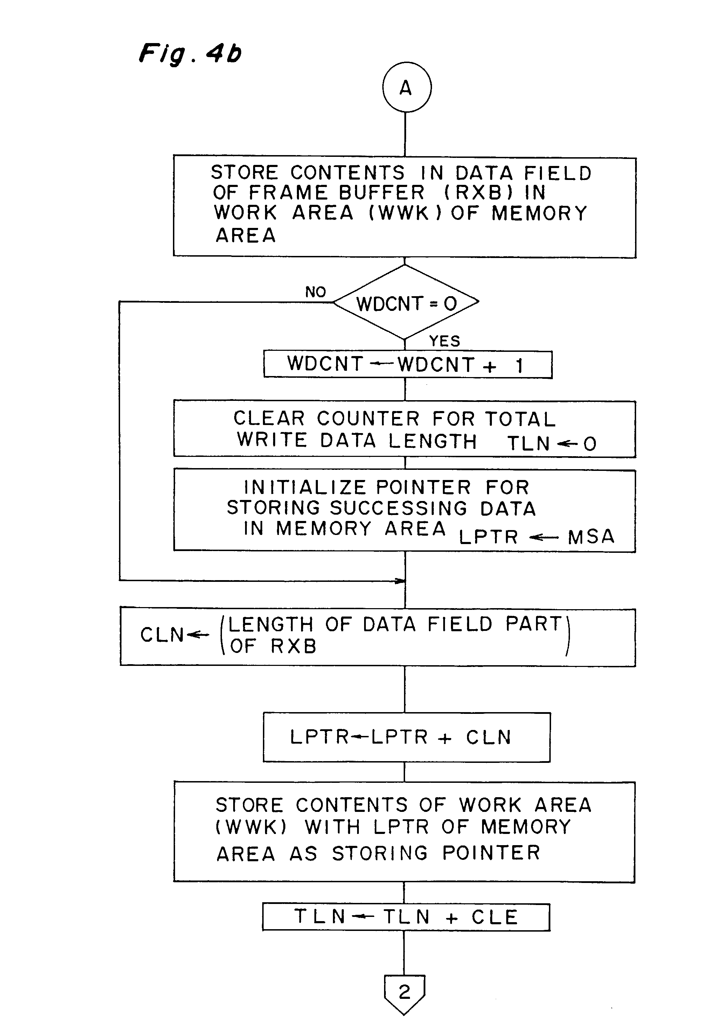

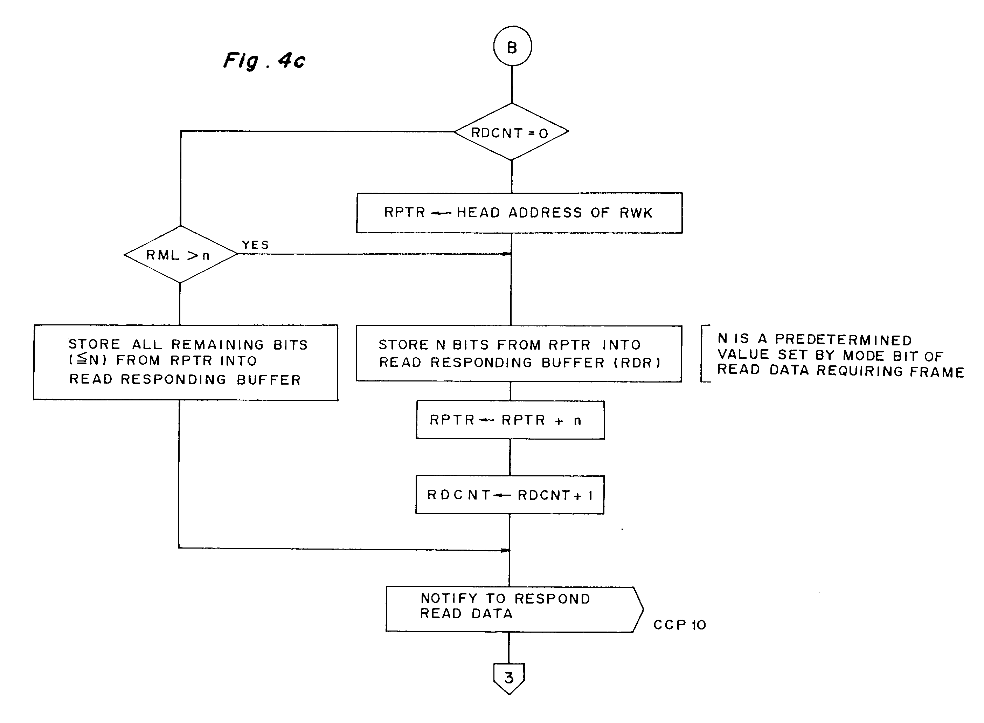

Figs. 4a, 4b and 4c taken together is a block diagram showing the transition of the receiving state of the frame in a data transmission processing part of the embodiment;

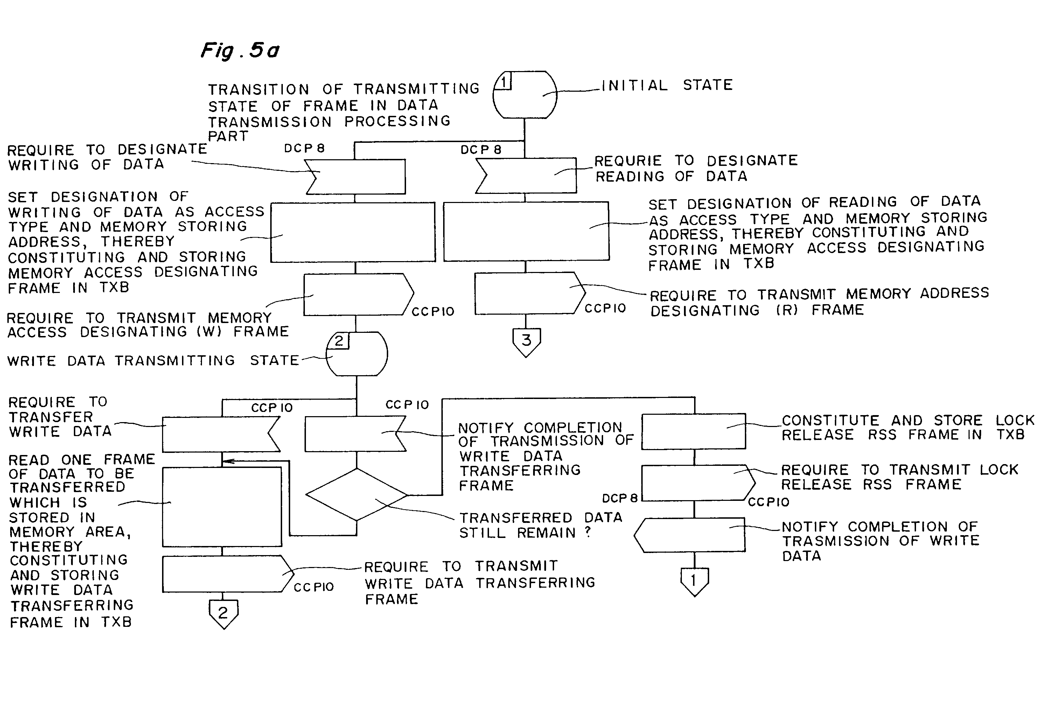

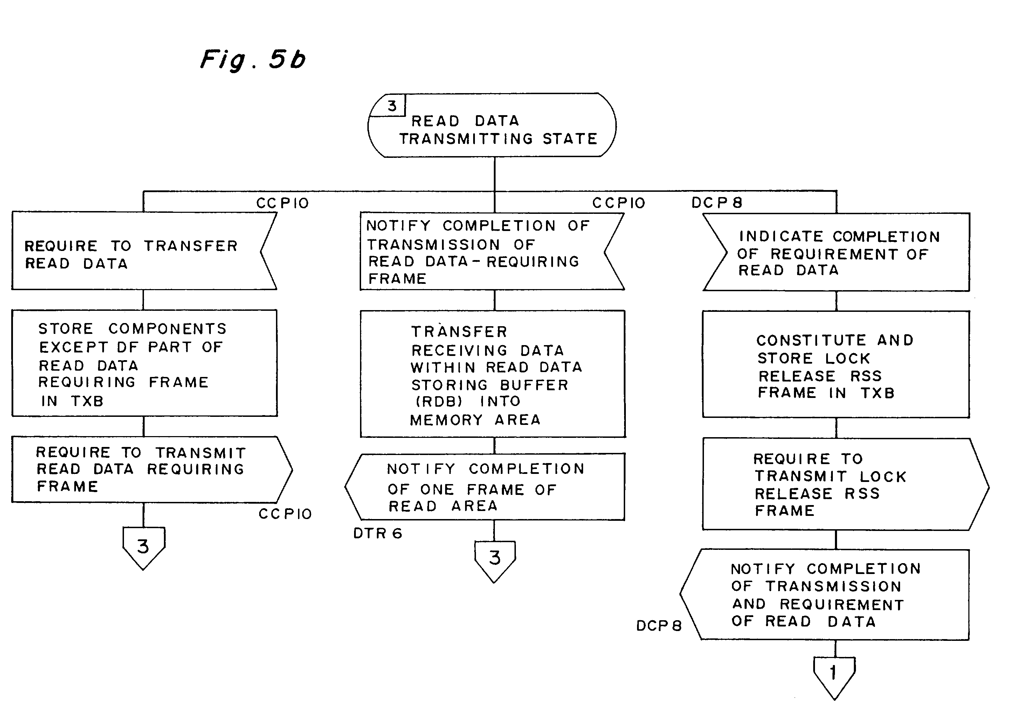

Figs. 5a and 5b taken together is a block diagram showing the transition of the transmitting state of the frame in the data transmission processing part of Fig. 4;

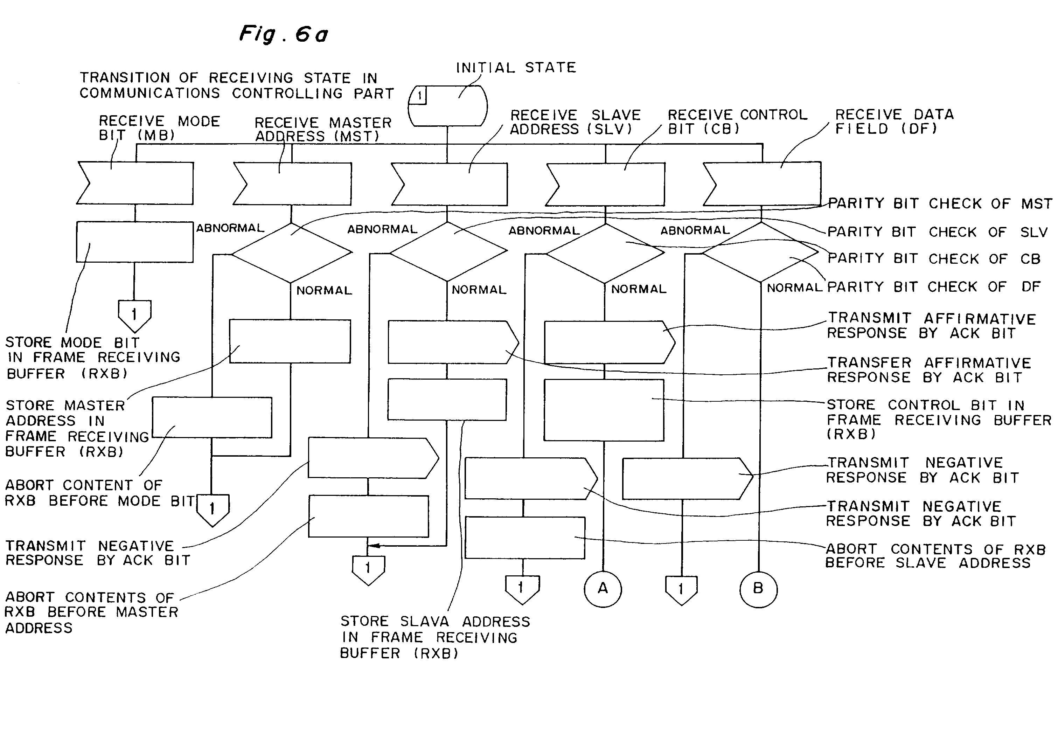

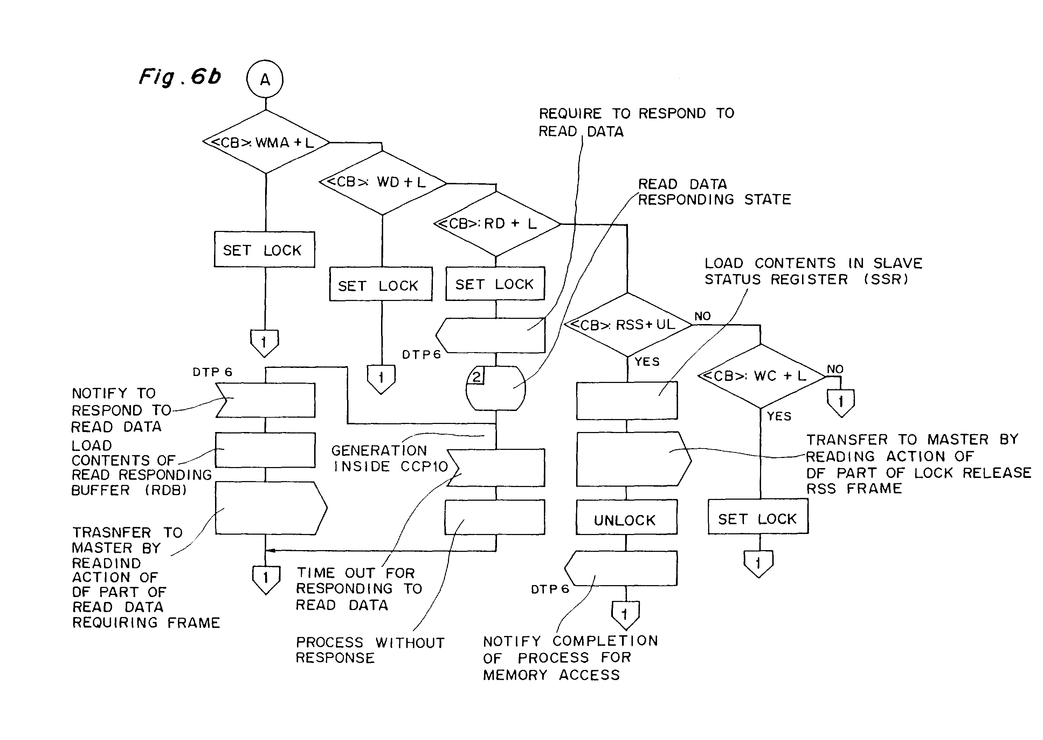

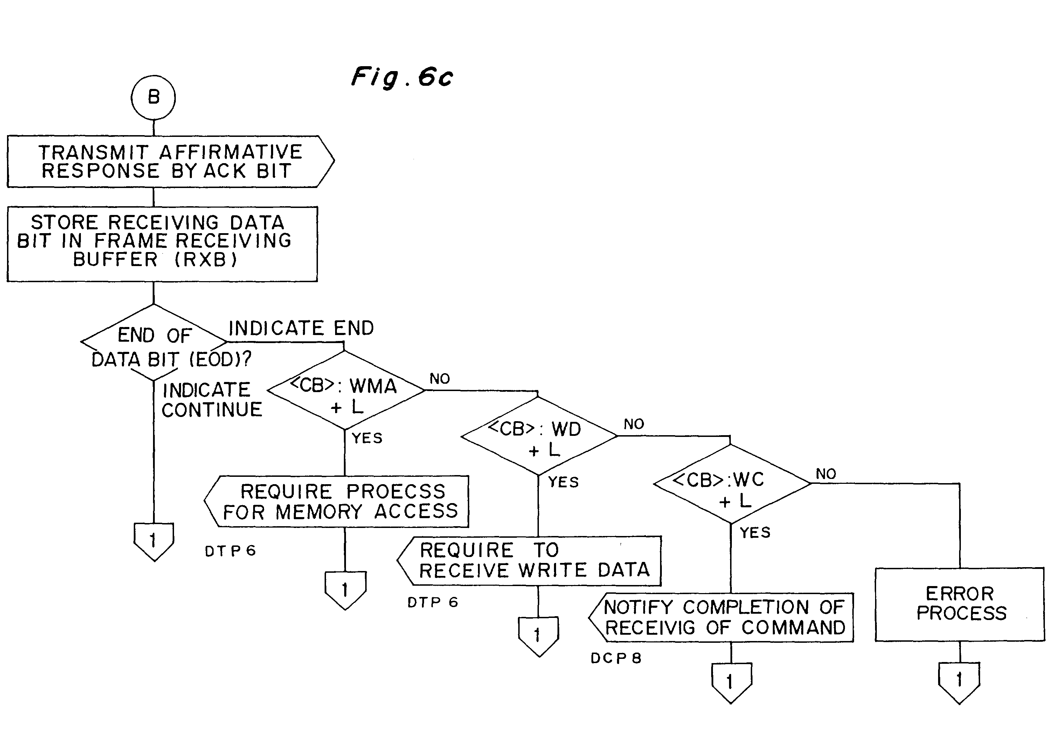

Figs. 6a, 6b and 6c taken together is a block diagram showing the transition of the receiving state in a communications controlling part of the embodiment;

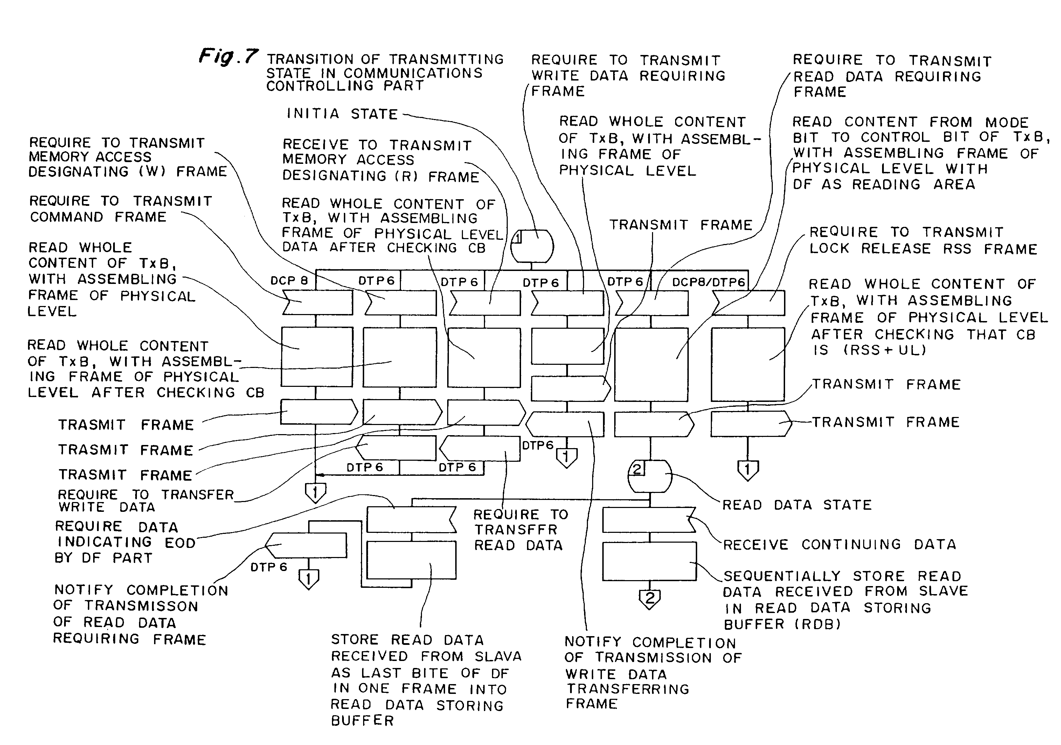

Fig. 7 is a block diagram showing the transition of the transmitting state in the communications controlling part of Figa. 6a, 6b and 6c;

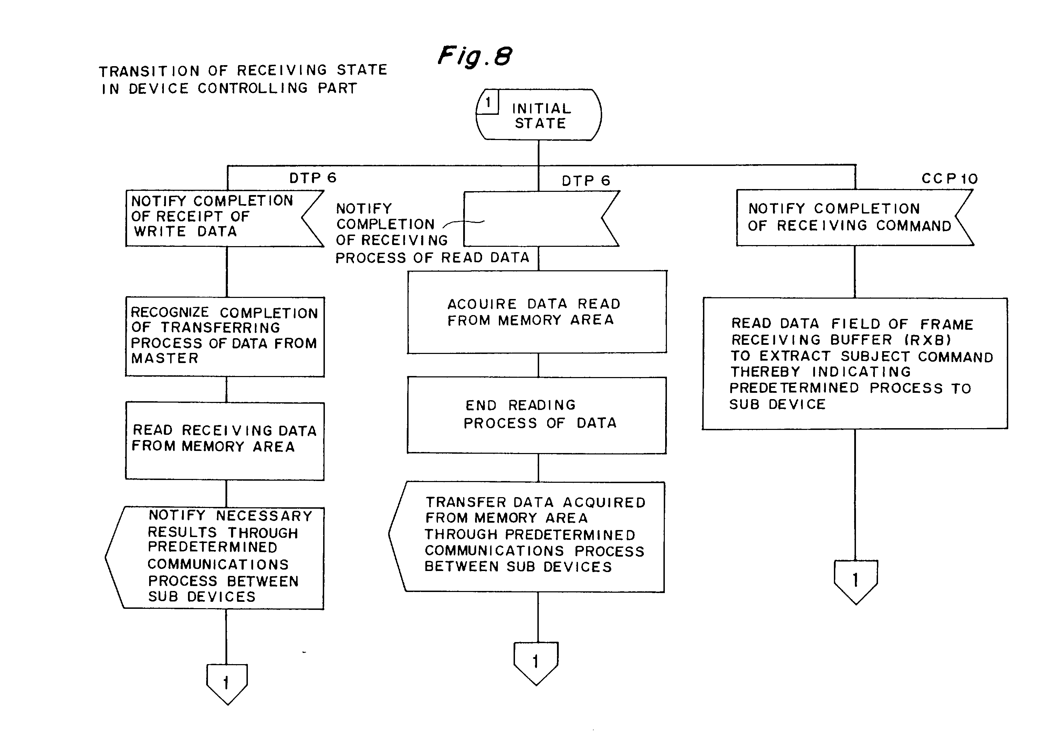

Fig. 8 is a block diagram showing the transition of the receiving state in a device controlling part of the embodiment;

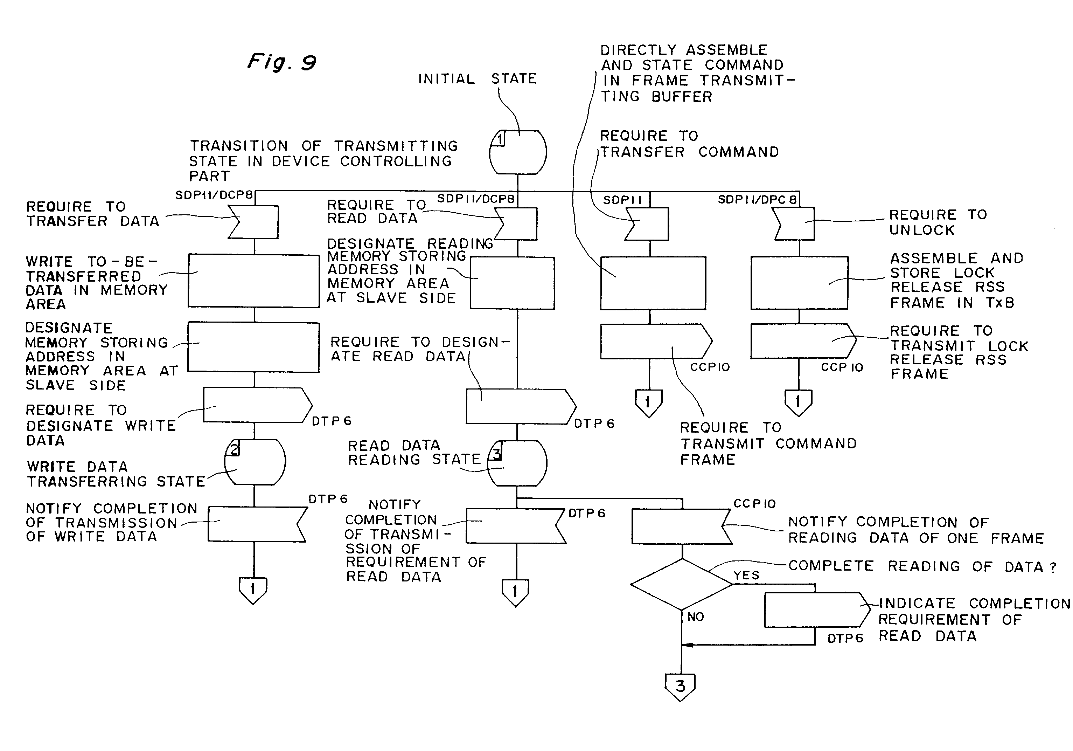

Fig. 9 is a block diagram showing the transition of the transmitting state in the device controlling part of Fig. 8;
Fig. 10 is a structural diagram of a bus-type communications system common to the embodiment of the present invention and a conventional example;
Fig. 11 is a structural diagram of a frame common to the embodiment of the present invention and the conventional example;
Fig. 12 is a table explanatory of the definition of a control bit common to the embodiment of the present invention and the conventional example; and
Figs. 13a and 13b are diagrams showing the communications sequences in reading and writing of data in the conventional example.

### DETAILED DESCRIPTION OF THE INVENTION

Before the description of the present invention proceeds, it is to be noted here that like parts are designated by like reference numerals throughout the accompanying drawings.

Referring first to Fig. 1, there is shown a logical structure of a memory access designating (R) frame/memory access designating (W) frame according to one preferred embodiment of the present invention. A format of a data field is shown as well. The detailed format and definition of each field constituting the above frame are the same as in the conventional example shown in Figs. 11 and 12 except the definition of DF123 when a control bit 117 represents (WMA+L). Fig. 2 illustrates the structure of a device unit which offers a communications means in an electronic device of the present embodiment. Figs. 3a and 3b explain the communications sequence in each of reading and writing operations during data transmission between a master electronic device and a slave electronic device. Figs. 4a, 4b and 4c taken together shows the transition of the receiving state of the frame in a data transmission processing part of the device unit of Fig. 2 based on SDL description (CCITT, Z series recommendation). Figs. 5a and 5b taken together is a diagram showing the transition of the transmitting state of the frame in the data transmission processing part of Fig. 2 on SDL description. Similarly, Figs. 6a, 6b and 6c taken together is a SDL description showing the transition of the receiving state in a communications controlling part within a communications unit in Fig. 2, Fig. 7 is a SDL description showing the transition of the transmitting state in the communications controlling part within the communications unit of Fig. 2, Fig. 8 is a SDL description showing the transition of the receiving state in the device controlling part of Fig. 2, and Fig. 9 is a SDL description showing the transition of the transmitting state in the device controlling part of Fig. 2.

It is to be noted here that the present invention is not restricted to the format illustrated in Fig. 1, nor to the structure of the device unit within the electronic device in Fig. 2 and the transition of the state indicated by SDL descriptions in Figs. 3 through 9.

Each component in the electronic device of the present embodiment will be discussed in detail hereinbelow.

In the diagram of Fig. 1, numeral 1 represents a part of the components constituting a data field (DF) 123 in a memory access designating (R) frame/memory access designating (W) frame, and particularly representing the type of access (ATP) to identify whether a frame transferred from the master to the slave subsequent to the memory access designating frame is a read data requiring frame which requires the data to be read out from the slave or a write data transferring frame which requires the data to be written into the slave. When the type of access 1 designates reading of data, a read address in a memory area of the slave side which the master reads is stored in a memory storing address (MSA) 2 as an access address. On the other hand, when the access type 1 is writing of data, a write address in a memory area of the slave side into which the master writes is stored in the memory storing address (MSA) 2. The description as to the logical structure of the main components 119 to 124 of the frame will be abbreviated here since the structure thereof is identical with that of the prior art shown in Fig. 11.

With reference to Fig. 2, an electronic device 3 is consisted of a device unit 4 and a subdevice unit 11. The device units 4 with a data transmission function are connected each other via a common signal transmission path 27. The subdevice unit 11 carries out control of the whole device.

The device unit 4 functions as a communications means, having a communications unit 5, a data transmission processing part 6 and a device controlling part 8. The device unit 4 further includes a memory area 7 for use as a storing area of the data transmitted between the master and slave, a frame receiving buffer 12, a frame transmitting buffer 13, a read responding buffer 14, a read data storing buffer 25 and a slave status register 26. The device unit 4 works as an interface with the subdevice unit 11.

The communications unit 5 is provided with a transceiver unit 9 and a communications controlling part 10.

The data transmission processing part 6 (DPT) which is a main component of the electronic device of the present embodiment is positioned between the communications controlling part 10 and device controlling part 8, with managing and processing each communications sequence in reading and writing the data between the master and slave through memory access. Informations necessary for the communications process are sent and received between the data transmission processing part 6 and communications controlling part 10 via signals 15 and 16 and various kinds of registers 12, 13, 14, 25 and 26. Besides, informations necessary for transmission of data are sent and received between the data transmission processing part 6 and device controlling part 8 via signals 17 and 18 and memory area 7 where the data to be read or written are transferred between the master and slave.

The memory area (MEM) 7 stores data to be written by the master into the slave. The data are given from the device controlling part 8 at the master side via a signal 24 and sent to the data transmission processing part 6 via a signal 22. Moreover, the memory area (MEM) 7 stores data to be read out by the master from the slave. The data read from the slave side extracted from a receiving frame of the data transmission processing part 6 at the master side are stored in MEM 7 via a signal 21 and sent to the device controlling part 8 which indicates reading of the data via a signal 23. Moreover, when the master indicates the slave side to read data, the data to be read are preliminarily stored and retained in MEM 7 before the data transmission processing part 6 at the slave side reads the data via a signal 22.

The device controlling part (DCP) 8 sends a command generated from a subdevice unit 11 or from itself to a communications controlling part 10 via the frame transmitting buffer 13 and a signal 20 requiring transmission of the command, and at the same time, receives and processes the content of a frame including the command and received by the communications controlling part 10 via the frame receiving buffer 12 and a signal 19 notifying the receipt of the command, while indicating reading of the data from the master to the slave via signals 18, 24 and 22 and memory area 7 when such an indication is generated from the subdevice unit 11 or by itself, or indicating reading of the data via signals 18, 21 and 23 and memory area 7. Furthermore, when the data are written from the master to the slave, DCP 8 is informed of the completion of the writing process at the data transmission processing part 6 to the memory area 7 via a signal 17.

A transceiver unit 9 is connected to the signal transmission path 27, working as an interface of electrophyscial conditions.

The communications controlling part (CCP) 10 offers a communications controlling function necessary for transmission of the content of DF 123 of the frame of Fig. 1 between the master and slave in a transparent manner. The CCP 10 is connected to the data transmission processing part 6 and device controlling part 8, with making an access to the various kinds of registers, so that CCP 10 functions at least to indicate processing of a receiving frame to the data transmission processing part 6 when the content indicated by a control bit CB 122 of the receiving frame through the signal transmission path 27 is a memory address with lock (WMA+L), a read data with lock (RD+L) or a write data with lock (WD+L), or to indicate processing of the frame directly to the device controlling part 8 when the content indicated by the control bit is a write command with lock (WC+L).

The subdevice unit 11 is comprised of various kinds of controlling circuits as subdevices such as a deck controlling circuit, a tuner controlling circuit, audio signal controlling circuit, video signal controlling circuit, input/output manipulation display controlling circuit, etc. The controlling circuits are classified for every function common or peculiar to an audio visual device. When the subdevice unit 11 is connected to the device controlling part 8, data can be transferred between the master and slave or a command is required to be transmitted or received.

The frame receiving buffer (RXB) 12 is employed at the communications controlling part 10 and data transmission processing part 6 to temporarily store the content of the frame 124 of Fig. 1 in the event that the frame is to be received.

The frame transmitting buffer (TXB) 13 is employed at the device controlling part 8 and data transmission processing part 6 to temporarily store the content of the frame 124 of Fig. 1 in the event that the frame is to be transmitted.

Meanwhile, the read responding buffer 14 is used to temporarily store the data to be transferred to the slave at a read action section in DF 123 of a read data requiring frame.

The read data storing buffer 25 is used, in contrast to the buffer 14, to temporarily store the data of DF 123 of the read data requiring frame transferred from the slave side when the read data requiring frame is transmitted by the master.

The slave status register 26 sequentially holds and memorizes the state of the frame receiving buffer (RXB) 12 as to whether it is vacant, or the state of the communications controlling part 10 as to whether it is locked or unlocked, with maintaining informations of a predetermined format.

A plurality of electronic devices 3 are connected each other via the respective communications units 5 through the common signal transmission line 27, so that data are transmitted between the master and slave devices. The signal transmission line 27 is identical to the signal transmission line 100 shown in Fig. 10.

When the data are transmitted from the communications controlling part (CCP) 10 to the data transmission processing part (DTP) 6, at least four kinds of requirements/notifications (requirement of transmission of a write data, requirement of transmission of a read data, notification of completion of transmission of a write data transferring frame and notification of completion of transmission of a read data requiring frame) are issued through the signal 15. On the other hand, when the frame is received, at least four kinds of requirements/notifications (requirement of responding process of a read data, requirement of receiving process of a write data, notification of completion of a memory access procedure and requirement of a memory access procedure) are transmitted by the signal 15.

A signal 16 transmits at least five kinds of requirements (requirement of transmission of a memory access designating (W) frame, requirement of transmission of a memory access designating (R) frame, requirement of transmission of a write data transferring frame, requirement of transmission of a read data requiring frame, and requirement of transmission of a lock release RSS frame) when the frame is transmitted from the data transmission processing part (DPT) 6 to the communications controlling part (CCP) 10. The signal 16 also transmits a notification of responding to the read data when the frame is received.

The signal 17 transmits at least two kinds of notifications (notification of completion of transmission of a write data and notification of completion of transmission of a read data requiring frame) when the frame is transmitted from the data transmission processing part (DCP) 6 to the device controlling part (DCP) 8, and at least two kinds of notifications (notification of completion of receipt of a write data and notification of completion of receipt of a read data) when the frame is received.

The signal 18 is used to transmit at least three kinds of requirements/indications (requirement of indication of a write data, requirement of indication of a read data and indication of completion of requirement of a read data) only when the frame is transmitted from the device controlling part (DCP) 8 to the data transmission processing part (DTP) 6.

A notification of completion of a read data of at least one frame is issued by the signal 19 when the frame is transmitted from the communications controlling part (CCP) 10 to the device controlling part (DCP) 8. Furthermore, when the frame is received, the signal 19 issues at least a notification of completion of receipt of the command.

The signal 20 is used so that at least two kinds of requirements (requirement of transmission of a command frame and requirement of transmission of a lock release RSS frame) are issued only when the frame is transmitted from DCP 8 to CCP 10.

The signal 21 sends informations of a memory storing address and a write data to be written at the slave side which is transferred from the master side, thus allowing the data transmission processing part (DTP) 6 to read/write data to the memory area (MEM) 7.

On the other hand, the signal 22 sends from the memory area (MEM) 7 to the data transmission processing part (DTP) 6 at least a read data to be read which is necessary in preparation for DTP 6 at the slave side to respond at least to the requirement of the read data from the master side.

When the device controlling part (DCP) 8 receives the notification of completion of receiving process of a read data from DTP 6, at least the read data is fed from the memory area (MEM) 7 to DCP 8 by the signal 23.

When DCP 8 indicates DTP 6 to write data, the write data at the master side to be written in the memory storing address (MSA) 2 at the slave side is given to the memory area (MEM) 7 by the signal 24.

Now, with reference to Figs. 3a and 3b, the memory access designating (R) frame 28 is used first when the master starts to read the content of a specific data preliminarily defined in the memory area (MEM) 7 of Fig. 2 in the slave electronic device. In the memory access designating (R) frame 28, the control bit CB 122 of Fig. 1 is (WMA+L) and the access type (ATP) 1 in the data field DF 123 has a bit b7=0 (a read data is designated by a succeeding frame). The memory storing address (MSA) 2 at the slave side into which the data are read is set succeeding to the ATP 1 in the frame 28.

The frame 29 is a read data requiring frame in which the control bit 117 of Fig. 11 is (RD+L) of Fig. 12, and which is used when the master reads the data from the slave side using the read action section (SM) 132 of the data field DF 123 in Fig. 11.

The lock release RSS frame 30 is used to notify the completion of a series of reading procedures from the master to the slave by the memory access designating (R) frame 28 and read data requiring frame 29 and to indicate release of the locking state of the slave by the master side.

The frame 31 is first used to transmit the data from the master to the slave when the data are written into a specific storing area preliminarily defined in the memory area (MEM) 7 shown in Fig. 2. The control bit CB 122 of Fig. 1 of the frame 31 represents (WMA+L) and the access type (ATP) 1 in DF 123 of the frame has a bit b7=1 (the succeeding frame indicates a write data). The memory storing address (MSA) 2 at the slave side into which the data are written is set following the ATP 1.

The frame 32 which is a write data transferring frame used by the master when the data are written into the slave side using a write action section (MS) 131 of the data field DF 123 of Fig. 11. The frame 32 has the control bit 117 of Fig. 11 to represent (WD+L) of Fig. 12.

The lock release RSS frame 33 in the same format as the frame 30 is used to notify the completion of a series of writing procedures by the master to the slave by the memory access designating (W) frame 31 and write data transmitting frame 32, and to indicate release of the lock of the slave by the master.

The internal operation of the device unit 4 in the above-described construction will be described more in detail hereinbelow. In the first place, the operation of the communications controlling part (CCP) 10 of Fig. 2 will be explained. CCP 10 carries out the operation for transition thereof into the receiving state as shown in Figs. 6a, 6b and 6c when a frame is to be received between the master and slave via the transceiver unit 9 through the signal transmission line 27. When the frame is to be transmitted, CCP 10 carries out the operation for transition thereof into the transmitting state as depicted in Fig. 7.

As described earlier, the data transmission processing part (DTP) 6 is positioned between the device controlling part (DCP) 8 and communications controlling part (CCP) 10, and is responsible for the whole writing/reading processes including management of the procedures therefor. According to the present embodiment, when the frame is to be received, DTP 6 carries out the operation of transition thereof into the receiving state in accordance with a flow of Figs. 4a, 4b and 4c, while performing the operation for transition into the transmitting state shown in Figs. 5a and 5b when the frame is to be transmitted.

Meanwhile, given that the operation of DTP 6 and CCP 10 for transition into the transmitting/receiving state is a communications processing function offered to DCP 8, and this communications processing function is divided into the receiving process and the transmitting process, DCP 8 performs the operation for transition into the receiving state as the receiving process in reading or writing the data as indicated in Fig. 8 and the operation for transition into the transmitting state as shown in Fig. 9 as the transmitting process.

When the device unit 4 performs writing of data from the master side to the slave side with using the above DCP 8, DTP 6 and CCP 10, that is, in realizing the writing operation of Fig. 3b, the master side and slave side will operate in compliance with respective flows indicated in Figs. 4 through 9.

The operation at the master side will be discussed in the items <1> to <8> described below.
<1> In the event that a data of a desired length should be transferred to an electronic device (at the slave side) having the same structure of the device unit 4 as the master electronic device 3 of Fig. 2 and connected with the subdevice unit (SDP) 11 or device controlling part (DCP) 8 at the master side through the signal transmission line 27, so that the data be written into the memory area (MEM) 7 at the slave side, DCP 8, when confirming the generation of a requirement of transmission of the data at the initial state (1) of Fig. 9, stores the write data to be transferred into MEM 7 and sends to DTP 6 a preliminarily defined absolute/relative address into which the data to be transferred is written at the slave side as a memory storing address. At the same time, DCP 8 issues a requirement of indication of the write data to DTP 6. As a result, DCP 8 is turned into a write data transmitting state (2).
<2> When DTP receives the requirement of indication of the write data from DCP 8 at the initial state (1) in Fig. 5a, DTP 6 assembles a memory access designating (W) frame and stores the same in TXB 13 of Fig. 2 on the basis of the access type of the indication of the write data and the memory storing address given from DCP 8, and then issues a requirement of transmission of the memory access designating (W) frame to CCP 10. The internal state of DPT 6 is changed into the write data transmitting state (2).
<3> With reference to Fig. 7, when CCP 10 receives the requirement of transmission of the memory access designating (W) frame, CCP 10 reads the content temporarily stored in TXB 13, thereby transmitting the frame to the slave side through the transceiver unit 9 and signal transmission line 27. Moreover, CCP 10 issues a requirement of transfer of the write data to DTP 6. At this time, CCP 10 is maintained at the present initial state (1).
<4> When DTP 6 receives the requirement of transfer of the write data from CCP 10 at the state (2) shown in Fig. 5a, DTP 6 reads the data of a predetermined length to be transferred which is stored in MEM 7 by DCP 8 and is transmittable by one frame, then assembles and stores a write data transferring frame in TXB 13. At the same time, a requirement of transmission of the write data transferring frame is issued by DTP 6 to CCP 10. The internal state of DTP 6 is maintained at the present write data transmitting state (2).
<5> CCP 10 reads the content temporarily stored in TXB 13 when it receives the requirement of transmission of the write data transferring frame from DTP 6 at the initial state (1) in Fig. 7. After CCP 10 transmits the frame to the slave, CCP 10 issues a notification of completion of transmission of the write data transferring frame to DTP 6. CCP 10 is kept at the present initial state (1).
<6> In consequence, DTP 6 receives the notification of completion of transmission of the write data transferring frame at the write data transmitting state (2) of Fig. 5a. Then, DTP 6 makes it clear whether the data stored in MEM 7 beforehand still remains to be transferred. If some data remains without being transferred, DTP 6 carries out the process described in the above item <4>. On the other hand, when the data are completely transferred, a lock release RSS frame is assembled so that the writing operation in the slave is stopped. The lock release RSS frame is stored in TXB 13. Thereafter, DTP 6 issues a requirement of transmission of the lock release RSS frame to CCP 10, and a notification of completion of transmission of the write data to DCP 8 as well. The internal state of DTP 6 is moved to the initial state (1).
<7> As the requirement of transmission of the lock release RSS frame is received from DTP 6 to CCP 10 at the initial state (1) of Fig. 7, CCP 10 reads the content temporarily stored in TXB 13, thereby carrying out the transmitting process of the frame to the slave. CCP 10 is maintained at the present initial state (1).
<8> At the write data transferring state (2) shown in Fig. 9, when DCP 8 receives the notification of completion of transmission of the write data from DTP 6, DCP 8 notifies the subdevice unit (SDP) 11 of the completion of transmission of the write data upon necessities. Thereafter, the internal state of DCP 8 is returned to the initial state (1).

The operation at the slave side will now be discussed in the following items <9> to <16>.
<9> CCP 10 at the slave side of Fig. 2 starts to receive any frame 124 of Fig. 11 transmitted from the master side through the signal transmission line 27 and transceiver unit 9 along the flow indicated in Fig. 6a, 6b and 6c, whereby a mode bit 114 to a slave address 116 in the frame 124 are correctly received. Further, when CCP 10 receives a control bit 117 in a normal manner, it checks the content of the control bit 117. Since the memory access designating (W) frame is transmitted first from the master side in this case, CCP 10 sets the slave in the locking state as indicated by the master side if the control bit 117 CB=(WMA+L), and stands at the initial state (1) waiting for normal receipt of a data field 123 of the frame 124 which is being received. Subsequently, if the data field 123 is completely received normally before an EOD appears, CCP 10 discriminates whether the already received control bit 117 of the frame including the data field 123 was (WMA+L). If the control bit 117 was (WMA+L), CCP 10 issues a requirement of a memory access procedure to DTP 6 within the device unit 4 at the slave side thereby to notify start of the memory access procedure. At the same time, the internal state of CCP 10 is maintained at the initial state (1). On the contrary, if the control bit 117 was not (WMA+L), CCP 10 performs the operation for transition into the other states shown in Figs. 6a, 6b and 6c.
<10> When DTP 6 receives the requirement of the memory access procedure from CCP 10 at the initial state (1) of Fig. 4a, DTP 6 extracts an access type (ATP) 1 and a memory storing address (MSA) 2 of a data bit 118 of RXB 12 temporarily stored by CCP 10, so that the ATP 1 is determined. As a result, if the ATP 1 is writing of data, a receiving counter (WDCNT) of the write data transferring frame 32 is cleared to 0, and the internal state of DTP 6 is changed to the write data receiving state (2).
<11> When CCP 10 receives normally the write data transferring frame 32 shown in Fig. 3b at the initial state (1) of Fig. 6a, a requirement of receiving process of the write data is issued to DTP 6. The internal state of CCP 10 is kept as it is.
<12> Accordingly, when DTP 6 receives the requirement of receiving process of the write data from CCP 10 at the state (2) of Fig. 4a, DTP 6 reads the content of the data field of RXB 12 and stores the memory storing address (MSA) 2 extracted in the process depicted in the foregoing item <10> through a temporary storing work area (WWK) of MEM 7 into a designated memory section of MEM 7 defined as a head address. The present internal state of DTP 6 is maintained.
<13> If CCP 10 normally receives a plurality of succeeding write data transferring frames from the master side to the slave side, with issuing a requirement of receiving process of the write data to DTP 6, DTP 6 repeats the process in the item <12> above along the flow in Figs. 4a and 4b.
<14> After CCP 10 confirms at the initial state (1) of Fig. 6a that the control bit is (RSS+L) while it normally receives the lock release RSS frame 32 of Fig. 3b, it transfers the present content of a preliminarily set slave status register (SSR) 26 from the slave side to the master side at the data field DF 123 of the lock release RSS frame which is being received, using the read action section (SM) 132 shown in Fig. 11. Then, CCP releases the slave side from the locking state, and further issues a notification of completion of the memory access procedure to DTP 6. The internal state of CCP 10 is changed to the initial state (1).
<15> When DTP 6 receives the notification of completion of the memory access procedure at the write data receiving state (2), it completes the write data receiving process, issuing a notification of completion of receipt of the write data to DCP 8. Thus, the internal state of DTP 6 is moved to the initial state (1). Upon necessities, DTP 6 notifies DCP 8 of the memory storing address (MSA) 2 with using the signal 17.
<16> When DCP 8 receives the notification of completion of receipt of the write data from DTP 6 at the initial state (1) in Fig. 8, it acknowledges that the transferring process of the write data from the master side is completed, and thereafter reads and processes the receiving data from MEM 7 with using the memory storing address (MSA) 2 obtained from DTP 6.

Moreover, DCP 8 notifies the necessary processing result to the subdevice unit (SDP) 11 by the use of a communications procedure or the like. The internal state of DCP 8 is changed to the initial state (1).

The writing operation of Fig. 3b can be easily performed by the above-described processes.

The reading operation of Fig. 3a can also be performed easily in accordance with the processes shown in the flow charts of Figs. 4-9, and therefore the description thereof will be abbreviated here.

In addition, the operation for transition of the internal state in each of the device controlling part (DCP) 8, data transmission processing part (DTP) 6 and communications controlling part (CCP) 10 which are main components of the device unit 4 according to this embodiment can be realized in any of the following manners in practice.

Each component is constructed independently of exclusive hardware logic.

Each component is constituted independently as a software/firmware of a microprocessor of 16 bits, 8 bits, 4 bits, etc.

Two of the DCP 8, DTP 6 and CCP 10 are constructed based on special hardware logic, and the remaining one is formed of a software/firmware of a microprocessor.

Two of the DCP 8, DTP 6 and CCP 10 are formed of a hardware/firmware of a special or general-purpose microprocessor, and the remaining one is constructed according to hardware logic.

All of the DCP 8, DTP 6 and CCP 10 are constituted of a software/firmware of a single special or general-use microprocessor, or based on single special hardware logic.

As described hereinabove, the present invention provides a communications means which has a function realizing easy transmission of data.

Besides, the following effects are achieved by the present invention.
(A) Two different processes (writing and reading) for transfer of data between the master side and slave side are rendered common and uniform by using the definition of a format whereby a data field is made common to the memory access designating (R) frame and the memory access designating (W) frame, and a simple means for notifying completion of each of the above processes. Furthermore, complexities in installing the above processes are removed.
(B) A communications means within an electronic device responsible for the command transferring process and data transferring process can be constituted in a definite structure, and the logical structure within a device realizing the communications function can be designed concretely. In consequence, different processes, i.e., data transferring process and command transferring process can be easily performed by one communications means, so that a subdevice at the application side is equipped with a communications function convenient to use with uniformity.

## Claims

1. An electronic device (3) having a data transmission function suitable for transmitting data between said electronic device and another electronic device, said electronic device (3) being adapted for connection via a common signal transmission line (27) to another electronic device, and being provided with a communications means (4) so that a frame (124) of a predetermined message format including a data field part (123) in which a command, data or memory access information is stored and a control bit part (122) in which at least the type of said command, data or memory access information stored in said data field part (123) is written is transmitted therebetween via said common signal transmission line in accordance with a preliminarily set communications controlling function, wherein said communications means (4) comprises a communications unit (5) which provides said communications controlling function to transmit the content in said data field (123) of the frame (124) in a transparent manner between a transmitter electronic device and a receiver electronic device;
characterized in that
the electronic device is adapted to transfer or receive preliminarily a memory access designating frame (28; 31) commonly before the transmission of a read data requiring frame (29) or a write data transferring frame (32), wherein the format of a data field of the memory access designating frame is defined so that the data field of the memory access designating frame sent from a master electronic device to a slave electronic device is provided with a writing unit of data related to the type of access, i.e. reading or writing, and a memory storing address (2); and that said communications means further comprises a device controlling part (8) and a data transmission processing part (6), wherein
said device controlling part (8) provides a relay/processing means related to the transmission and receipt of said command between a user of said communication means and said communications unit and a relay/processing means related to the transmission and receipt of said data between said user and said data transmission processing part (6), and said data transmission processing part is interposed between said communications unit (5) and said device controlling part (8) and which is adapted to manage the communications state for reading and writing of data with the use of said frame for transfer of data between electronic devices,
wherein, the said device controlling part of the master electronic device is adapted so that when the data are to be transmitted between the master electronic device and the slave electronic device, the type of access and a memory storing address at the side of the slave electronic device are sent from the device controlling part of the master electronic device to the data transmission processing part, and, if writing of data is indicated, the data to be transferred are also sent from the device controlling part to the data transmission processing part, the said data transmission processing part of the master electronic device is adapted to assemble a memory access designating frame based on the transmission informations sent from the device controlling part of the master electronic device and sends the same to a data transmission processing part of the slave electronic device through a communications controlling part (10) of said communication unit (5), the data transmission processing part of the slave electronic device is adapted to discriminate the type of access in preparation for every process to receive a write data transferring frame or a read data requiring frame subsequently sent from the master electronic device, and, after the data are completely transferred between the master and slave electronic devices by the write data transferring frame or read data requiring frame, each data transmission processing part of the master and slave are adapted to inform the result of communications, i.e., the content of the data, to the respective device controlling part.

2. An electronic device having a data transmission function as claimed in claim 1, wherein a device unit (4) providing a common communications means includes at least said communications unit (5), said device controlling part (8) and said data transmission processing part (6), further characterized in that when a command is to be transmitted, a communications controlling function for transmission of said command is achieved by using a first transmission line (19, 20) within said device unit (4) which is formed through formation of a line directly connecting said device controlling part (8) and communications unit (5), while, when a data is to be transmitted, a communications controlling function for transmission of said data is achieved by using a second transmission line (17, 18) within said device unit (4) which is formed through formation of a line whereby said data transmission processing part (6) is interposed between said device controlling part (8) and communications unit (5).

3. An electronic device having a data transmission function as claimed in claim 1 or 2, wherein, in the event that a data except a command is to be transmitted between a device controlling part (8) and a data transmission processing part (6), a memory area (7) is formed which is accessible from said device controlling part (8) or said data transmission processing part (6), so that said data except a command is transmitted via said memory area (7).

4. An electronic device having a data transmission function as claimed in claim 1, 2 or 3, wherein, in the communications state in which a necessary communications process is carried out so that a data of a plurality of bytes is written/read between a transmitter electronic device and a receiver electronic device by transmitting a second frame having said data stored in a data field after transmitting a first frame having a memory access information stored in said data field to a data transmission processing part of said transmitter electronic part, said data transmission processing part has an access type (reading or writing) for designating the type of an access of the data stored in said second frame to a memory space within said receiver electronic device preliminarily defined by said first frame or/and a memory storing address for designating a specific area on said memory space within said receiver electronic device doing reading or writing in accordance with said access type at least in said data field,
in that said data transmission processing part within said receiver electronic device is adapted to discriminate first said access type after receipt of said first frame, thereby determining that either writing or reading of data from said transmitter electronic device is started, and managing the preliminarily determined communications state to said second frame received subsequent to said first frame and is adapted to perform necessary procedures therefor.

5. An electronic device having a data transmission function as claimed in claim 4, wherein one or a plurality of continuously transmitted second frames are used.

6. An electronic device having a data transmission function as claimed in claim 4, wherein said memory storing address is constituted of 2 or more bytes and 32 or less bytes.

7. An electronic device having a data transmission function as claimed in claim 4, wherein said memory storing address is constituted of 2 or more bytes and 16 or less bytes.

8. A network system comprising a plurality of electronic devices as claimed in anyone of claims 1 to 7,
further characterized in that all of said plurality of electronic devices (3) are connected to a common signal transmission line (27).

## Patentansprüche

1. Elektronische Vorrichtung (3) mit einer Datenübertragungsfunktion, welche geeignet ist zum Übertragen von Daten zwischen der elektronischen Vorrichtung und einer weiteren elektronischen Vorrichtung, wobei die elektronische Vorrichtung (3) zur Verbindung über eine gemeinsame Signalübertragungsleitung (27) zu einer weiteren elektronischen Vorrichtung ausgebildet ist und mit einer Kommunikationseinrichtung (4) versehen ist, so daß ein Rahmen (124) eines vorbestimmten Mitteilungsformates mit einem Datenfeld-Teil (123), in welchem ein Befehl, Daten oder Speicherzugriffsinformationen gespeichert sind, und einem Steuerungsbit-Teil (122), in welchem wenigstens die Art des Befehls, der Daten oder der Speicherzugriffsinformationen, die in dem Datenfeld-Teil (12) gespeichert sind, eingetragen ist, dazwischen über die gemeinsame Signalübertragungsleitung entsprechend einer vorab eingestellten Kommunikationssteuerungsfunktion übertragen wird, wobei die Kommunikationseinrichtung (4) eine Kommunikationseinheit (5) umfaßt, welche die Kommunikations-Steuerungsfunktion zum Übertragen des Inhaltes in dem Datenfeld (123) des Rahmens (124) in einer transparenten Weise zwischen einer elektronischen Sendevorrichtung und einer elektronischen Empfangsvorrichtung bereitstellt; dadurch gekennzeichnet, daß die elektronische Vorrichtung so ausgebildet ist, daß sie vorab einen Speicherzugriffs-Beschreibungsrahmen (28; 31) sendet oder empfängt, gewöhnlich vor der Übertragung eines Lesedaten-Anforderungsrahmens (29) oder eines Schreibdaten-Übertragungsrahmens (32), wobei das Format eines Datenfeldes des Speicherzugriffs-Beschreibungsrahmens so definiert ist, daß das Datenfeld des Speicherzugriffs-Beschreibungsrahmens, der von einer elektronischen Master-Vorrichtung zu einer elektronischen Slave-Vorrichtung gesendet wird, mit einer Schreibeinheit von Daten versehen ist, die zu dem Zugriffstyp gehören, d.h., lesen oder schreiben, und einer Speicher-Adresse (2); und daß
die Kommunikationseinrichtung weiterhin einen Geräte-Steuerungsteil (8) und einen Datenübertragungs-Verarbeitungsteil (6) umfaßt, wobei der Geräte-Steuerungsteil (8) eine Verzögerungs/Verarbeitungseinrichtung bereitstellt, welche zu der Übertragung und dem Empfang des Befehls zwischen einem Benutzer der Kommunikationseinrichtung und der Kommuhikationseinheit gehört, und eine Verzögerungs/Verarbeitungseinrichtung, welche zu der Übertragung und dem Empfang der Daten zwischen dem Benutzer und dem Datenübertragungs-Verarbeitungsteil (6) gehört, und daß der Datenübertragungs-Verarbeitungsteil ist zwischen der Kommunikationseinheit (5) und dem Geräte-Steuerungsteil (8) eingefügt ist, und welcher ausgebildet ist, um den Kommunikationszustand zum Lesen und Schreiben von Daten unter Verwendung des Rahmens zur Übertragung von Daten zwischen elektronischen Vorrichtungen zu verwalten, wobei der Geräte-Steuerungsteil der elektronischen Master-Vorrichtung so ausgebildet ist, daß, wenn die Daten zwischen der elektronischen Master-Vorrichtung und der elektronischen Slave-Vorrichtung zu übertragen sind, die Art des Zugriffs und eine Speicheradresse auf der Seite der elektronischen Slave-Vorrichtung von dem Geräte-Steuerungsteil der elektronischen Master-Vorrichtung zu dem Datenübertragungs-Verarbeitungsteil gesendet werden, und, wenn das Schreiben von Daten angezeigt wird, die zu übertragenden Daten ebenfalls von dem Geräte-Steuerungsteil zu dem Datenübertragungs-Verarbeitungsteil gesendet werden, wobei der Datenübertragungs-Verarbeitungsteil der elektronischen Master-Vorrichtung so ausgebildet ist, daß er einen Speicherzugriffs-Bestimmungsrahmen basierend auf den von dem Geräte-Steuerungsteil der elektronischen Master-Vorrichtung gesendeten Informationen zusammenstellt und denselben durch einen Kommunikations-Steuerungsteil (10) der Kommunikationseinheit (5) zu einem Datenübertragungs-Verarbeitungsteil der elektronischen Slave-Vorrichtung sendet, wobei der Datenübertragungs-Verarbeitungsteil der elektronischen Slave-Vorrichtung so ausgebildet ist, daß er die Zugriffsart als Vorbereitung für jede Verarbeitung zum Empfangen eines Schreibdaten-Übertragungsrahmens oder eines Lesedaten-Anforderungsrahmens, der nachfolgend von der elektronischen Master-Vorrichtung gesendet wird, unterscheidet, und, nachdem die Daten durch den Schreibdaten-Übertragungsrahmen oder den Lesedaten-Anforderungsrahmen vollständig übertragen sind, ist jeder Datenübertragungs-Verarbeitungsteil des Masters und des Slaves so ausgebildet, daß er das Ergebnis der Kommunikation, d.h., den Inhalt der Daten, an den entsprechenden Geräte-Steuerungsteil berichtet.

2. Elektronische Vorrichtung mit einer Datenübertragungsfunktion nach Anspruch 1, bei welcher eine Vorrichtungseinheit (4), welche eine gemeinsame Kommunikationseinrichtung bereitstellt, wenigstens die Kommunikationseinheit (5) beinhaltet, den Geräte-Steuerungsteil (8) und den Datenübertragungs-Verarbeitungsteil (6), dadurch gekennzeichnet, daß, wenn ein Befehl zu übertragen ist, eine Kommunikations-Steuerungsfunktion zur Übertragung des Befehls durch Verwenden einer ersten Übertragungsleitung (19, 20) innerhalb der Vorrichtungs-Einheit (4) verwirklicht wird, welche durch die Formierung einer Leitung gebildet wird, welche den Geräte-Steuerungsteil (8) und die Kommunikationseinheit (5) direkt verbindet, während, wenn Daten zu übertragen sind, eine Kommunikations-Steuerungsfunktion zur Übertragung der Daten verwirklicht wird durch Verwendung einer zweiten Übertragungsleitung (17, 18) innerhalb der Vorrichtungs-Einheit (4), welche durch die Formierung einer Leitung gebildet wird, wodurch der Datenübertragungs-Verarbeitungteil (6) zwischen dem Geräte-Steuerungsteil (8) und der Kommunikationseinheit (5) eingefügt ist.

3. Elektronische Vorrichtung mit einer Datenübertragungsfunktion nach Anspruch 1 oder 2, bei welcher in dem Fall, daß Daten mit Ausnahme eines Befehles zwischen einem Geräte-Steuerungsteil (8) und einem Datenübertragungs-Verarbeitungsteil (6) zu übertragen sind, ein Speicherbereich (7) ausgebildet ist, welcher von dem Geräte-Steuerungsteil (8) oder dem Datenübertragungs-Verarbeitungsteil (6) ansprechbar ist, so daß die Daten mit Ausnahme eines Befehls durch den Speicherbereich (7) übertragen werden.

4. Elektronische Vorrichtung mit einer Datenübertragungsfunktion nach Anspruch 1, 2 oder 3, bei welcher in dem Kommunikationszustand, in welchem ein erforderlicher Kommunikationsprozeß ausgeführt wird, so daß ein Datenwert aus mehreren Bytes zwischen einer elektronischen Sendevorrichtung und einer elektronischen Empfangsvorrichtung durch Übertragen eines zweiten Rahmens mit dem in einem Datenfeld gespeicherten Datenwert nach Übertragen eines ersten Rahmens mit einer in dem Datenfeld gespeicherten Speicherzugriffsinformation zu einem Datenübertragungs-Verarbeitungsteil des elektronischen Sendeteiles geschrieben/gelesen wird, der Datenübertragungs-Verarbeitungsteil eine Zugriffsart (Lesen oder Schreiben) zum Bezeichnen der Art eines Zugriffs auf die in dem zweiten Rahmen gespeicherten Daten in einem Speicherplatz innerhalb der elektronischen Empfangsvorrichtung aufweist, welche vorab durch den ersten Rahmen festgelegt ist, oder/und eine Speicheradresse zum Bezeichnen eines bestimmten Bereiches des Speicherplatzes innerhalb der elektronischen Empfangsvorrichtung zum Ausführen von Lesen oder Schreiben entsprechend der Zugriffsart wenigstens in dem Datenfeld, in dem der Datenübertragungs-Verarbeitungsteil innerhalb der elektronischen Empfangsvorrichtung so ausgebildet ist, daß er nach Empfang des ersten Rahmens zuerst die Zugriffsart unterscheidet, um dadurch zu bestimmen, daß entweder Schreiben oder Lesen von Daten von der elektronischen Sendevorrichtung beginnt und den vorab bestimmten Kommunikationszustand für den nach dem ersten Rahmen empfangenen zweiten Rahmen verwaltet und dafür erforderliche Prozeduren ausführt.

5. Elektronische Vorrichtung mit einer Datenübertragungsfunktion nach Anspruch 4, bei welcher einer oder mehrere kontinuierlich übertragene zweite Rahmen verwendet werden.

6. Elektronische Vorrichtung mit einer Datenübertragungsfunktion nach Anspruch 4, bei welcher die Speicheradresse aus 2 oder mehr Bytes und 32 oder weniger Bytes aufgebaut ist.

7. Elektronische Vorrichtung mit einer Datenübertragungsfunktion nach Anspruch 4, bei welcher die Speicheradresse aus 2 oder mehr Bytes und 16 oder weniger Bytes aufgebaut ist.

8. Netzwerk-System mit mehreren elektronischen Vorrichtungen nach einem der Ansprüche 1 bis 7,
dadurch gekennzeichnet, daß sämtliche elektronischen Vorrichtungen (3) an eine gemeinsame Signalübertragungsleitung (27) angeschlossen sind.

## Revendications

1. Dispositif électronique (3) ayant une fonction de transmission de données appropriée pour transmettre des données entre ledit dispositif électronique et un autre dispositif électronique, ledit dispositif électronique (3) étant adapté pour être connecté via une ligne de transmission commune de signal (27) à un autre dispositif électronique, et étant pourvu d'un moyen de communications (4) de sorte que le bloc de transmission de données (124) d'un format de message prédéterminé comprenant une partie champ de données (123) dans laquelle un ordre, des données ou une information d'accès à une mémoire sont stockés et une partie bit de commande (122) dans laquelle au moins le type dudit ordre, desdites données ou de ladite information d'accès à une mémoire stockées dans ladite partie champ de données (123) est écrit, est transmise entre eux via ladite ligne de transmission commune de signal selon une fonction de commande de communication réglée auparavant, dans lequel ledit moyen de communications (4) comprend une unité de communication (5) qui réalise ladite fonction de commande de communication pour transmettre le contenu dans ledit champ de données (123) du bloc de transmission de données (124) de façon transparente entre un dispositif électronique émetteur et un dispositif électronique récepteur ;
caractérisé en ce que
le dispositif électronique est adapté pour transférer ou recevoir auparavant un bloc de transmission de données (28; 31) désignant l'accès à une mémoire de façon courante, avant la transmission d'un bloc de transmission de données (29) demandant des données de lecture ou d'un bloc de transmission de données (32) de transfert de données d'écriture, dans lequel le format du champ de données du bloc de transmission de données désignant l'accès à une mémoire est défini de telle façon que le champ de données du bloc de transmission de données désignant l'accès à une mémoire envoyé depuis un dispositif électronique maître à un dispositif électronique asservi est pourvu d'une unité d'écriture de données en rapport avec le type d'accès, c'est à dire la lecture ou l'écriture, ainsi que d'une adresse de stockage de mémoire (2) ; et en ce que
ledit moyen de communication comprend en outre une partie de commande de dispositif (8) et une partie de traitement de la transmission des données (6), dans lequel ladite partie de commande de dispositif (8) réalise un moyen de relais/traitement relatif à la transmission et à la réception dudit ordre entre l'utilisateur dudit moyen de communication et ladite unité de communication ainsi qu'un moyen de relais/traitement relatif à la transmission et à la réception desdites données entre ledit utilisateur et ladite partie de traitement de la transmission de données (6), et en ce que ladite partie de traitement de transmission de données est interposée entre ladite unité de communications (5) et ladite partie de commande de dispositif (8) et laquelle est adaptée pour gérer l'étai des communications pour la lecture et l'écriture de données en utilisant ledit bloc de transmission de données pour le transfert des données entre les dispositifs électroniques, dans lequel ladite partie de commande de dispositif du dispositif électronique maître est adaptée, lorsque les données doivent être transmises entre le dispositif électronique maître et le dispositif électronique asservi, le type d'accès et une adresse de stockage de mémoire du côté du dispositif électronique asservi sont envoyés depuis la partie de commande de dispositif du dispositif électronique maître à la partie de traitement de transmission de données, et, si l'écriture des données est indiquée, les données devant être transférées sont également envoyées depuis la partie de commande de dispositif à la partie de traitement de transmission de données, ladite partie de traitement de transmission de données du dispositif électronique maître est adaptée pour assembler un bloc de transmission de données d'accès de mémoire sur la base des informations de transmission envoyées depuis la partie de commande de dispositif du dispositif électronique maître et pour envoyer le même à la partie de traitement de transmission des données du dispositif électronique asservi par l'intermédiaire d'une partie de commande de communications (10) de l'unité de commande des communications (5), la partie de traitement de transmission des données du dispositif électronique asservi est adaptée pour faire la distinction entre les types d'accès en préparation pour chaque processus afin de recevoir un bloc de transmission de données de transfert de données d'écriture ou un bloc de transmission de données demandant des données de lecture envoyées à la suite depuis le dispositif électronique maître, et, après que les données ont été complètement transférées entre les dispositifs électroniques maître et asservi au moyen du bloc de transmission de données de transfert de données d'écriture ou du bloc de transmission de données de demande de données de lecture, chaque partie de traitement de transmission de données du maître et de l'asservi est adaptée pour informer la partie de commande de dispositif respective du résultat des communications, c'est à dire du contenu des données.

2. Dispositif électronique adapté à une fonction de transmission de données selon la revendication 1, dans lequel une unité de dispositif (4) réalisant un moyen de communications commun comprend au moins ladite unité de communications (5), ladite partie de commande de dispositif (8) et ladite partie de traitement de transmission des données (6), caractérisé en outre en ce que lorsqu'un ordre doit être transmis, une fonction de commande des communications destinée à la transmission dudit ordre est obtenue en utilisant une première ligne de transmission (19,20) qui se trouve à l'intérieur de ladite unité de dispositif (4), laquelle est constituée par la formation d'une ligne reliant directement ladite partie de commande de dispositif (8) et l'unité de communication (5), alors que, lorsque des données doivent être transmises, une fonction de commande de communications destinée à la transmission desdites données est obtenue en utilisant une seconde ligne de transmission (17,18) qui se trouve à l'intérieur de ladite unité de dispositif (4), laquelle est constituée par la formation d'une ligne grâce à laquelle ladite partie de traitement de transmission de données (6) est interposée entre ladite partie de commande de dispositif (8) et l'unité de communications (5).

3. Dispositif électronique adapté à une fonction de transmission de données selon la revendication 1 ou 2, dans lequel, dans le cas où des données, à l'exception d'un ordre, doivent être transmises entre une partie de commande de dispositif (8) et une partie de traitement de transmission de données (6), une zone de mémoire (7) est formée, laquelle est accessible à partir de ladite partie de commande de dispositif (8) ou de ladite partie de traitement de transmission (6), de sorte que lesdites données, à l'exception d'un ordre, sont transmises via ladite zone de mémoire (7).

4. Dispositif électronique ayant une fonction de transmission de données selon la revendication 1, 2 ou 3, dans lequel, à l'état de communication dans lequel un traitement nécessaire de communications est exécuté de telle façon que des données d'une pluralité de multiplets sont écrites/lues entre un dispositif électronique émetteur-récepteur et un dispositif électronique récepteur en transmettant un second bloc de transmission de données, lesdites données étant stockées dans un champ de données après la transmission d'un premier bloc de transmission de données ayant une information d'accès à une mémoire stockée dans ledit champ de données dans une partie de traitement de transmission de données de ladite partie électronique d'émetteur-récepteur, ladite partie de transmission de données possède un type d'accès (lecture ou écriture) destiné à indiquer le type d'accès des données stockées dans ledit second bloc de transmission de données à un espace de mémoire à l'intérieur dudit dispositif électronique récepteur défini au préliminaire par ledit premier bloc de transmission de données et/ou une adresse de stockage de mémoire destinée à indiquer une zone spécifique dans ledit espace de mémoire qui se trouve à l'intérieur dudit dispositif électronique récepteur effectuant la lecture ou l'écriture conformément audit type d'accès au moins dans ledit champ de données,
en ce que ladite partie de traitement de transmission de données qui se trouve à l'intérieur dudit dispositif électronique récepteur est adaptée pour distinguer en premier lieu ledit type d'accès après réception dudit premier bloc de transmission de données, déterminant ainsi que soit l'écriture ou soit la lecture des données provenant dudit dispositif électronique émetteur-récepteur a débuté, et gérant l'état de communication déterminé au préliminaire pour ledit second bloc de transmission de données reçu après ledit premier bloc de transmission de données et adapté pour exécuter les procédures nécessaires destinées à cela.

5. Dispositif électronique ayant une fonction de transmission de données selon la revendication 4, dans lequel un ou une pluralité de second bloc de transmission de données transmises en continu sont utilisés.

6. Dispositif électronique ayant une fonction de transmission de données selon la revendication 4, dans lequel ladite adresse de stockage de mémoire est constituée de deux ou plusieurs multiplets et de 32 multiplets ou moins.

7. Dispositif électronique ayant une fonction de transmission de données selon la revendication 4, dans lequel ladite adresse de stockage de mémoire est constituée de 2 ou plusieurs multiplets et de 16 multiplets ou moins.

8. Système de réseau comprenant une pluralité de dispositifs électroniques selon l'une quelconque des revendications 1 à 7,
caractérisé en outre en ce que tous les dispositifs électroniques de ladite pluralité (3) sont reliés à une ligne commune de transmission de signal (27).
